# FASCICULE DE BREVET EUROPEEN

(11) **EP 3 360 019 B1**
(45) Date de publication et mention de la délivrance du brevet: **05.07.2023**
(21) Numéro de dépôt: 16793953.7
(22) Date de dépôt: 07.10.2016
(51) Int. Cl.: G05B 19/4093, B24B 1/00, B24B 9/14

(54) **PROCEDE D'ELABORATION D'UNE CONSIGNE D'USINAGE D'UNE LENTILLE OPTIQUE**
VERFAHREN ZUR ERZEUGUNG VON EINSTELLUNGEN ZUM BEARBEITEN EINER OPTISCHEN LINSE
METHOD FOR GENERATING SETTINGS FOR MACHINING AN OPTICAL LENS

(30) Priorité: 09.10.2015 FR 1559621
(43) Date de publication de la demande: 15.08.2018
(73) Titulaire: Essilor International, 94220 Charenton-le-Pont (FR)
(72) Inventeur: ANATOLE, Vincent, 94220 Charenton-Le-Pont (FR); SILEO, Cedric, 94220 Charenton-Le-Pont (FR)
(74) Mandataire: Jacobacci Coralis Harle
(86) Numéro de dépôt international: PCT/FR2016/052604
(87) Numéro de publication internationale: WO 2017/060655

(56) Documents cités:
- US-A- 5 272 622
- US-A- 5 272 622
- US-A- 5 532 933
- US-A- 5 532 933
- US-A1- 2004 186 614
- US-A1- 2004 186 614
- US-A1- 2010 305 745
- US-A1- 2010 305 745
- US-B1- 6 676 344
- US-B1- 6 676 344

## Description

### DOMAINE TECHNIQUE AUQUEL SE RAPPORTE L'INVENTION

La présente invention concerne de manière générale le domaine de la lunetterie.

Elle concerne plus particulièrement un procédé d'élaboration d'une consigne d'usinage d'une lentille optique en vue de son montage dans une monture de lunettes.

L'invention trouve une application particulièrement avantageuse dans l'usinage des lentilles optiques de formes complexes, c'est-à-dire dans l'usinage des lentilles ne pouvant pas être usinées au moyen d'un seul et même outil.

### ARRIERE-PLAN TECHNOLOGIQUE

La partie technique du métier de l'opticien consiste à monter une paire de lentilles optiques sur une monture de lunettes sélectionnée par un porteur.

Cette opération de montage comporte une première étape d'acquisition de la géométrie des entourages de la monture de lunettes sélectionnée, et une seconde étape d'usinage de la lentille qui comprend notamment une opération de détourage du contour de la lentille à la forme souhaitée.

Cette opération de détourage consiste à éliminer la partie périphérique superflue de la lentille optique concernée, pour en ramener le contour, qui est le plus souvent initialement circulaire, à un contour de forme identique à celle du contour de l'entourage de la monture de lunettes ou de forme approchée.

Concrètement, lorsque la monture de lunettes est cerclée, l'étape d'acquisition consiste généralement à palper le contour intérieur (le « drageoir ») de l'entourage de la monture des lunettes sélectionnée afin de déterminer précisément les coordonnées de points caractérisant la forme du contour de ce drageoir.

L'étape de détourage consiste alors à usiner le bord de la lentille optique de telle manière qu'il présente sur l'ensemble de son contour un biseau à engager dans le drageoir, dont le sommet présente une forme sensiblement identique à celle du contour du drageoir.

Ce type de montures de lunettes demeure celui qui est le plus couramment utilisé. Sa mise en oeuvre est par ailleurs simple à automatiser. Par conséquent, un protocole de communication a été développé pour permettre aux machines d'acquisition et aux machines d'usinage de communiquer ensemble, afin d'automatiser ces deux étapes d'acquisition et d'usinage.

Lorsque la monture de lunettes est plus complexe (semi-cerclée, sans cercle, ou mixte), ces deux étapes sont réalisées différemment.

Au cours de l'étape d'acquisition, on utilise généralement un gabarit (par exemple la lentille de référence fournie à l'opticien avec la monture de lunettes) pour déterminer la forme que devra présenter la lentille optique à détourer. L'acquisition d'une image de ce gabarit permet en effet de relever la forme du contour de ce gabarit ainsi que la position des éventuels trous pratiqués dans ce gabarit.

L'étape subséquente d'usinage comprendra alors une opération de détourage, puis des opérations de finition (rainurage, perçage, ...) pour permettre le montage de la lentille optique dans sa monture.

Ces opérations de détourage et de finition varieront sensiblement, en fonction du type de la monture de lunettes et de la complexité de l'usinage.

De ce fait, le protocole de communication précité ne peut être utilisé.

Chaque machine d'usinage comporte alors son propre langage et son propre logiciel permettant à l'opticien de saisir les informations nécessaires à l'usinage de chaque lentille optique.

Un inconvénient est que ce logiciel n'est généralement pas optimisé pour réduire la durée du cycle d'usinage de la lentille.

Un autre inconvénient est que l'opération de saisie d'informations est longue et fastidieuse à mettre en oeuvre pour l'opticien.

Pour pallier en partie cet inconvénient, la machine d'usinage peut être équipée d'une mémoire permettant d'enregistrer la consigne d'usinage de la lentille optique. De cette manière, lorsqu'une autre lentille doit être usinée pour être montée sur une monture de lunettes du même type, la machine d'usinage peut réutiliser cette consigne d'usinage.

Le problème de cette consigne d'usinage est que non seulement elle n'est pas standard (elle est élaborée en fonction des caractéristiques de la machine d'usinage et des prescriptions du porteur, si bien qu'elle est propre à cette machine et à ce porteur), mais elle est en outre statique (elle ne peut pas être ajustée lorsque les caractéristiques de la machine d'usinage changent ou lorsque les prescriptions du porteur changent).

On comprend en effet que cette consigne d'usinage comporte des instructions qui permettent, compte tenu par exemple des diamètres des outils utilisés, d'usiner la lentille optique à la forme souhaitée.

De ce fait, cette consigne d'usinage n'est valable que pour un type particulier de machines d'usinage et elle ne reste valable sur ce type de machines que pour autant que la machine d'usinage n'est pas modifiée. Dès lors qu'un outil d'usinage est remplacé par un autre outil plus performant mais de forme différente, l'ensemble des consignes d'usinage mémorisées devient en effet inexploitable.

Dans des domaines autres que celui de la lunetterie, on connaît deux documents US2004186614 A1 et US6676344 B1.

Le document US2004186614 décrit un procédé de pilotage d'une machine-outil dans lequel la pièce à usiner est divisée en objets et dans lequel les objets sont usinés dans un ordre précis.

Le document US6676344 propose quant à lui une méthode d'usinage d'une aube de turbine, dans lequel une barre cylindrique est progressivement ramenée à une forme proche de l'aube en passant de la forme cylindrique à une forme parallélépipédique, puis à une forme de plus en plus proche de celle souhaitée.

### OBJET DE L'INVENTION

Afin de remédier aux inconvénients précités de l'état de la technique, la présente invention propose un nouveau protocole de communication standard, qui permet de générer des fichiers de consignes d'usinage exploitables par des machines d'usinages de modèles différents et qui permet de réduire la durée du cycle d'usinage de la lentille optique.

Plus particulièrement, on propose selon l'invention un procédé d'élaboration d'une consigne d'usinage conforme à la revendication 1.

Préférentiellement, à l'étape d), la consigne d'usinage est générée indépendamment des caractéristiques d'une quelconque machine d'usinage susceptible d'être utilisée pour usiner la lentille optique.

La découpe de la forme à usiner de la lentille en « objets » permet de traiter chaque objet de manière différente et de déterminer a *priori* (c'est-à-dire sans savoir encore quelle machine d'usinage va être utilisée pour usiner la lentille optique) quel type d'outils sera nécessaire pour l'usinage de cet objet. La consigne d'usinage pourra ainsi comporter des instructions d'usinage de chaque objet adaptées à la forme de l'objet.

La détermination de l'ordre d'usinage va quant à elle permettre de déterminer *a priori* dans quel ordre il faudra usiner les objets pour réduire la durée du cycle d'usinage (en minimisant notamment le nombre de fois où il faudra changer d'outils).

D'autres caractéristiques avantageuses et non limitatives du procédé conforme à l'invention sont définies dans les revendications 2 et suivantes.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est un organigramme illustrant les étapes d'un algorithme permettant la mise en oeuvre d'un procédé d'élaboration d'une consigne d'usinage d'une lentille optique selon l'invention ;
- la figure 2 est une vue schématique du contour d'une lentille optique, sur laquelle sont représentés différents objets caractérisant la forme de ce contour ;
- la figure 3 est un tableau illustrant une méthode de séquençage de l'usinage des objets de la figure 2 ;
- la figure 4 est une vue schématique d'une partie d'une lentille optique ; et
- la figure 5 est une vue schématique en perspective d'une partie d'une monture de lunettes équipée de la lentille optique de la figure 2.

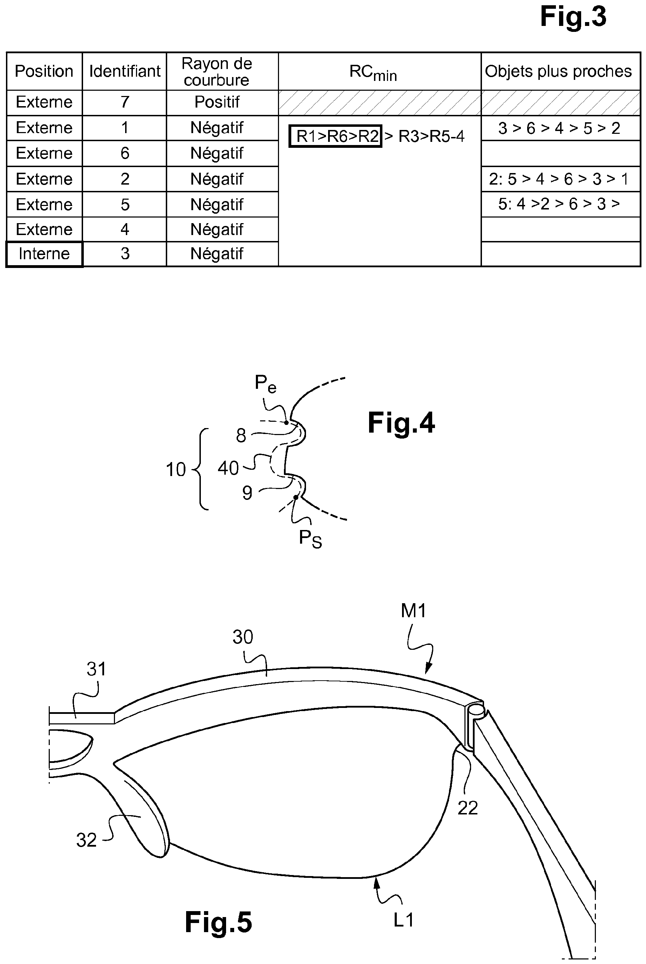

Comme le montre la figure 5, une paire de lunettes comporte généralement une monture de lunettes M1 et deux lentilles optiques L1 (dont une seule d'entre elles apparaît sur la figure 5) fixées à la monture de lunettes M1.

Les lentilles optiques L1 pourront être des lentilles de correction (c'est-à-dire des lentilles à puissances de réfringence non nulles) ou des lentilles de confort (par exemple des lentilles solaires). Dans le cas où il s'agira de lentilles de correction, les prescriptions du futur porteur de la paire de lunettes devront alors être prises en compte durant la fabrication de cette paire de lunettes, de manière que la paire de lunettes puisse présenter les caractéristiques de correction optique souhaitées.

Les contours de certaines lentilles optiques, notamment les lentilles optiques destinées à être montées dans une monture de type semi-cerclée ou de type sans entourage (à fixation sur verres percés), présentent des formes complexes comportant par exemple des zones incurvées vers le centre de la lentille, appelées zones de courbure négative ou zones concaves. Une telle zone concave 22 apparaît bien sur la figure 5.

Ces zones concaves correspondent généralement à des détails décoratifs du contour de la lentille optique ou à des zones de fixation de la lentille optique à la monture de lunettes.

Si les zones convexes sont généralement usinées au moyen d'une meule d'ébauche ou d'un outil de grand diamètre tel qu'une fraise ou un couteau (un tel outil étant peu coûteux à utiliser), les zones concaves nécessitent en revanche d'être usinées par un outil de diamètre très inférieur.

Il existe pour usiner de telles lentilles une grande variété de machines d'usinage dédiées, équipées d'une pluralité d'outils présentant de nombreux degrés de mobilités.

Ces machines d'usinage ont en commun d'avoir des arbres de blocage et d'entraînement en pivotement de la lentille à usiner, une meule d'ébauche rotative ou un outil de grand diamètre pour usiner le chant de la lentille, au moins un outil de finition (fraise, foret de perçage, meulette de rainurage, ...) pour usiner les zones concaves du contour de la lentille et pour percer la lentille, et un contrôleur permettant de piloter les différents degrés de mobilités des outils par rapport à la lentille, en fonction d'un fichier de consigne d'usinage.

Dans l'exemple qui sera ici considéré, comme le montre la figure 5, la monture de lunettes M1 est de type semi-cerclée, en ce sens qu'elle comporte deux arcades 30 sous chacune desquelles l'une des lentilles optiques L1 est prévue pour se fixer. Ces deux arcades 30 sont raccordées ensemble par un pontet 31 équipé de deux plaquettes nasales 32. Cette monture de lunettes M1 est ici réalisée dans une matière plastique rigide.

La lentille optique L1 représentée sur la figure 5, qui est celle que nous considérerons plus particulièrement dans le présent exposé, n'apparaît qu'en partie sur cette figure 5 en raison de la présence de la monture de lunettes M1 qui la recouvre partiellement.

Cette lentille optique L1, qui présente (au moment de la mise en oeuvre du procédé selon l'invention) un contour initial circulaire, doit être usinée de manière à présenter une forme particulière F1, de façon à ce qu'elle puisse être assemblée à la monture de lunettes M1.

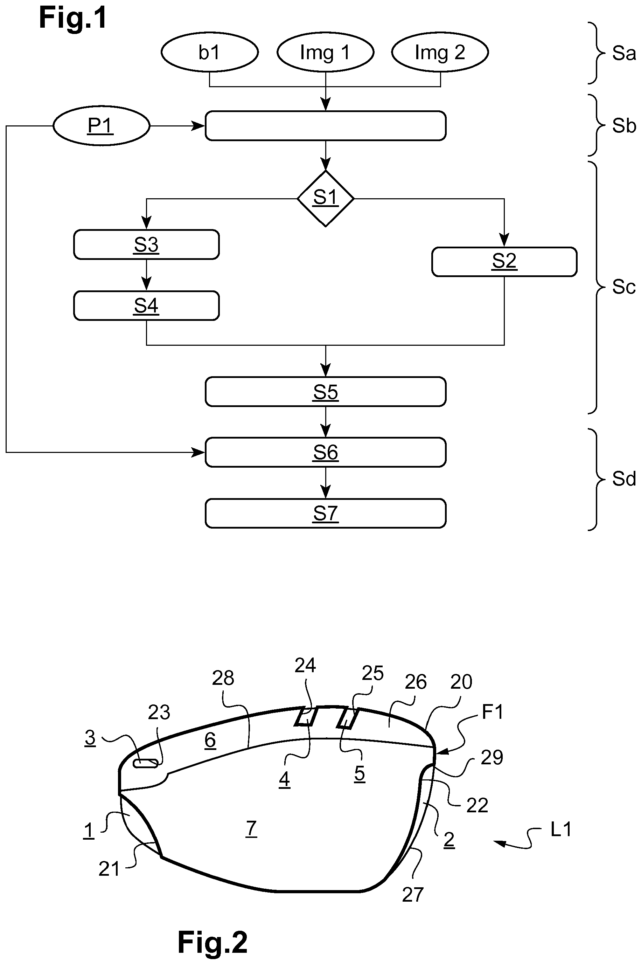

Sur la figure 2, on a représenté en trait épais le contour final 20 que devra présenter la lentille optique L1 après usinage.

On observe sur cette figure que la lentille optique L1 devra présenter un trou de perçage 23 de forme oblongue et quatre encoches 21, 22, 24, 25 en creux dans son bord périphérique et qu'elle devra être affinée sur une partie supérieure 26 de sa surface, afin de pouvoir être assemblée à la monture de lunettes M1 et afin que la paire de lunettes une fois assemblée présente la forme souhaitée.

La partie supérieure 26 de la lentille optique L1 sera notamment affinée afin de pouvoir être engagée dans une rainure prévue en creux dans l'arcade 30 correspondante de la monture de lunettes M1.

Parmi les encoches, la lentille optique L1 devra présenter deux encoches de fixation 24, 25 identiques situé dans cette partie supérieure 26 de la lentille optique L1. Elle devra aussi présenter une encoche temporale 22 de manière à définir, au-dessus de cette encoche temporale 22, un renflement 29 permettant d'optimiser la fixation de la lentille optique L1 dans l'arcade 30. Elle devra enfin présenter une encoche nasale 21 pour permettre le passage de la plaquette nasale 32 correspondante de la monture de lunettes M1.

Bien entendu, cette forme particulière F1 de lentille optique L1 n'est ici illustrée qu'à titre d'exemple, afin de bien expliquer le fonctionnement de la présente invention. Cette forme particulière F1 ne saurait en aucune façon restreindre la portée du présent exposé.

L'objectif de la présente invention consiste alors à élaborer une consigne d'usinage qui soit fonction de la forme de la paire de lunettes à obtenir, qui soit éventuellement aussi fonction des prescriptions P1 du futur porteur de la paire de lunettes, mais qui ne soit pas fonction des caractéristiques de la machine d'usinage qui sera utilisée pour usiner la lentille optique L1.

De cette manière, la consigne d'usinage pourra être implantée dans n'importe quelle machine d'usinage, cette dernière se chargeant alors seulement d'interpréter cette consigne eu égard à ses caractéristiques propres (diamètres des outils, outils disponibles, ...) de manière à usiner la lentille optique L1 à la forme souhaitée.

Ce procédé d'élaboration de la consigne d'usinage de la lentille optique L1 se compose de quatre étapes principales consistant à :
a) acquérir un fichier caractérisant la forme particulière F1 selon laquelle la lentille optique L1 devra être usinée pour permettre son montage sur la monture de lunettes M1,
b) décomposer ladite forme particulière F1 en plusieurs objets 1, 2, 3, 4, 5, 6, 7 distincts, dont une enveloppe extérieure 7 à l'intérieur de laquelle sont situés d'autres objets 1, 2, 3, 4, 5, 6,
c) déterminer un ordre d'usinage desdits autres objets 1, 2, 3, 4, 5, 6, et
d) générer la consigne d'usinage en fonction dudit ordre d'usinage.

Ce procédé d'élaboration pourra être mis en oeuvre par un calculateur tel qu'un ordinateur, comportant un processeur (CPU), une mémoire vive (RAM), une mémoire morte (ROM), et différentes interfaces d'entrée et de sortie.

Grâce à ses interfaces d'entrée, le calculateur est adapté à recevoir des signaux d'entrée provenant de différents moyens d'acquisition. Un moyen d'acquisition pourra être un écran tactile ou un clavier, permettant à l'utilisateur de saisir des informations telles que les prescriptions P1 du futur porteur de la paire de lunettes. Un autre moyen d'acquisition pourra être un dispositif de détermination de la forme particulière F1. Les signaux d'entrée pourront alors être relatifs à la forme particulière F1 et aux informations saisies par l'utilisateur.

La mémoire morte mémorise quant à elle des données utilisées dans le cadre du procédé de contrôle décrit ci-dessous. Elle mémorise notamment une application informatique, constituée de programmes d'ordinateur comprenant des instructions dont l'exécution par le processeur permet la mise en oeuvre par le calculateur du procédé décrit ci-après.

Grâce à ses interfaces de sortie, le calculateur pourra transmettre la consigne d'usinage au contrôleur de la machine d'usinage utilisée pour usiner la lentille optique L1.

Cet usinage se déroulera en deux phases, dont une phase d'ébauche au cours de laquelle le contour initial (généralement circulaire) de la lentille optique L1 sera ramené à une forme proche de la forme particulière F1 (au moyen de l'outil de grand diamètre), et une étape de finition au cours de laquelle les parties de la lentille optique L1 n'ayant pas pu être façonnées au moyen de l'outil de grand diamètre seront usinées par des outils de finition.

Sur la figure 1, on a représenté un organigramme illustrant l'algorithme mis en oeuvre par le calculateur pour élaborer la consigne d'usinage de la lentille optique L1.

Préalablement à l'étape a) (notée Sa sur la figure 1), la monture de lunettes M1 est fournie à l'utilisateur (ici l'opticien) avec deux lentilles de présentation prévues pour être retirées de la monture de lunettes M1 afin d'être remplacées par deux lentilles optiques L1.

Ces deux lentilles optiques L1 présentent initialement un contour circulaire, qu'il convient de ramener à la forme souhaitée (à savoir la forme particulière F1).

A l'étape a), l'acquisition de la forme particulière F1, selon laquelle la lentille optique L1 considérée devra être usinée, est réalisée en utilisant la lentille de présentation correspondante.

Pour cela, l'opticien utilise le dispositif de détermination qui est conçu pour exploiter la forme de la lentille de présentation afin d'en déduire la forme particulière F1. Un tel dispositif, ainsi que le procédé d'utilisation de ce dispositif pour mettre en oeuvre l'étape a), sont par exemple bien décrits dans la demande de brevet déposée sous le numéro FR1457240 (non encore publiée au moment du dépôt de la présente demande de brevet).

Pour résumer, ce dispositif comporte un support de blocage de la lentille de présentation et des moyens d'acquisition d'images. Le procédé d'utilisation de ce dispositif consiste alors à acquérir différentes images Img1, Img2, dont au moins une image de face de la lentille de présentation nue et une image de face de la lentille de présentation montée dans sa monture de lunettes M1. On pourra ici envisager d'acquérir également une troisième image de face de la monture de lunettes M1 nue, et une quatrième image de côté de la lentille de présentation.

On comprend que les deux images Img1, Img2, ainsi qu'éventuellement la troisième image, permettront de déterminer la forme particulière F1 que devra présenter la lentille optique L1 après usinage.

On comprend également que la quatrième image permettra d'obtenir une valeur de la courbure de la face avant de la lentille de présentation, appelée base b1, qu'on considérera égale à la courbure de l'arcade 30 de la monture de lunettes M1.

A l'issue de cette étape a), le calculateur a ainsi en mémoire un fichier illustrant la forme particulière F1 que la lentille optique L1 devra présenter après usinage.

Cette forme particulière F1, représentée sur la figure 2, est caractérisée par le contour final 20 (en trait gras), par le contour du trou de perçage 23, et par une ligne de démarcation 28 entre la partie de la surface de la lentille optique L1 qui sera recouverte par la monture de lunettes M1 et celle qui sera apparente.

Cette forme particulière F1 est ici considérée en projection dans un plan général moyen de la lentille optique L1.

Par « plan moyen général de la lentille », on peut par exemple entendre le plan qui est le plus proche, en moyenne, du contour de l'entourage correspondant de la monture de lunettes. Il pourrait en variante s'agir d'un autre plan, tel que par exemple le plan par lequel passe le contour initial de la lentille (avant usinage).

On pourra définir plusieurs « cadres » par rapport à cette forme particulière F1.

Un premier cadre, appelé cadre « boxing », correspondra au rectangle qui est circonscrit à la projection du contour final 20 dans le plan moyen général de la lentille, et dont deux des côtés sont parallèles à l'horizontal.

A l'étape b) (notée Sb sur la figure 1), la forme particulière F1 est décomposée en plusieurs objets 1, 2, 3, 4, 5, 6, 7 distincts.

D'autres cadres, appelés cadres « objet », pourront être définis par rapport à chacun de ces objets 1, 2, 3, 4, 5, 6, 7. Chacun de ces cadres « objet » correspondra alors au rectangle qui est circonscrit à la projection du contour de cet objet dans le plan moyen général de la lentille, et dont deux des côtés sont parallèles à l'horizontal.

La décomposition de la forme particulière F1 en objets pourrait être opérée de diverses manières.

En l'espèce, elle est ici réalisée en plusieurs opérations successives, de la manière suivante.

La première opération consiste à définir l'enveloppe extérieure 7, dont on rappelle qu'elle englobe tous les autres objets 1, 2, 3, 4, 5, 6.

Cette enveloppe extérieure 7 est définie par une ligne d'ébauche 27, qui illustre la forme du contour selon lequel la lentille optique L1 sera détourée au moyen de l'outil de grand diamètre.

Cette ligne d'ébauche 27 est définie comme étant confondue avec la plus grande partie possible du contour final 20 et comme présentant en tout point une forme convexe.

La ligne d'ébauche 27 relie ainsi, comme le montre la figure 2, les extrémités des contours des encoches de fixation 24, 25 et de l'encoche nasale 21.

Elle s'étend en revanche sur une longueur supérieure à celle de l'encoche temporale 22, de manière à présenter une forme convexe en tout point.

La seconde opération consiste à caractériser la forme particulière F1 en une pluralité d'autres objets, appartenant à l'une ou l'autre des catégories suivantes :
- une catégorie d'objets externes, et
- une catégorie d'objets internes.

L'objectif est qu'une fois que ces objets sont caractérisés, leurs formes et celle de l'enveloppe extérieure 7 permettent de caractériser la forme du contour final 20.

Au cours de cette opération, le calculateur définit chaque objet externe comme correspondant à une zone de la lentille optique L1 circonscrite entre la ligne d'ébauche 27 et le contour final 20. On considère ainsi qu'un tel objet externe présente un contour au moins en partie concave, qui est ouvert et dont les extrémités rejoignent le contour final 20.

En l'espèce, cinq objets externes 1, 2, 4, 5, 6 sont ici définis comme correspondant aux contours des encoches de fixation 24, 25, de l'encoche temporale 2, de l'encoche nasale 1, ainsi qu'au contour de la zone de la lentille optique L1 qui est circonscrite entre la ligne de démarcation 28 et le bord supérieur du contour externe 20.

Parmi ces objets externes, le calculateur détermine si l'objet est ou non débouchant (ie traversant), c'est-à-dire s'il s'étend sur une partie seulement de l'épaisseur de la lentille ou sur toute l'épaisseur de la lentille. S'il est non débouchant, le calculateur détermine si cet objet s'étend en creux dans une face avant ou arrière de la lentille optique L1.

En l'espèce, un unique objet est ici défini par le calculateur comme non débouchant : l'objet externe 6 correspondant à la zone de la lentille optique L1 qui est circonscrite entre la ligne de démarcation 28 et le bord supérieur du contour externe 20.

Le calculateur définit, à l'intérieur du contour final 20, un objet interne au niveau de chaque zone de la lentille percée. Un tel objet interne présente un contour qui est fermé.

En l'espèce, un unique objet interne 3 est ici défini au niveau du trou de perçage 23.

L'étape c) (notée Sc sur la figure 1) consiste à séquencer l'usinage des objets interne 3 et externes 1, 2, 4, 5, 6, de telle manière que l'usinage de la lentille optique L1 puisse être opéré le plus rapidement possible.

Ce séquençage est réalisé en fonction de la géométrie et/ou de la position relative de ces objets 1, 2, 3, 4, 5, 6 et/ou en fonction de la catégorie à laquelle appartient chacun de ces objets 1, 2, 3, 4, 5, 6.

Comme le montre la figure 1, cette étape c) est réalisée en plusieurs opérations S1 à S5, de la manière suivante.

La première opération S1 consiste à distinguer les objets des différentes catégories.

Alors, la seconde opération S2 n'est mise en oeuvre que pour les seuls objets internes 3.

Au cours de cette seconde opération S2, le calculateur vérifie si au moins un groupe de plusieurs objets internes satisfont un critère de proximité.

Plus précisément, le calculateur vérifie si les centres des cadres « objets » de plusieurs objets internes sont situés à une distance les uns des autres qui est inférieure à un seuil prédéterminé (de l'ordre par exemple du centimètre).

Ici, puisqu'il n'y a qu'un seul objet interne 3, aucun groupe d'objets internes ne peut être établi.

En revanche, si plusieurs objets internes satisfaisaient ce critère de proximité, le calculateur grouperait ces objets internes de manière qu'ils soient usinés selon une même direction de référence.

Dans le cas où les objets internes seraient percés au moyen d'un même foret de perçage, la consigne d'usinage serait alors élaborée de telle sorte que les objets internes de chaque groupe soient percés par le foret de perçage, suivant des axes de perçage parallèles.

Dans le mode de réalisation représenté sur les figures, le calculateur mémorise simplement, à ce stade du procédé, une trajectoire d'outil pour le perçage du trou de perçage 23 au travers de la lentille optique L1.

Considérant que le trou de perçage 23 présente un contour oblong, cette trajectoire pourra être confondue avec le contour de ce trou de perçage 23. Cette trajectoire correspondra alors au trajet que l'enveloppe de coupe de l'outil devra emprunter pour percer la lentille optique L1 à la forme souhaitée.

La troisième opération S3 est quant à elle mise en oeuvre pour les objets externes 1, 2, 4, 5, 6.

Au cours de cette troisième opération S3, le calculateur vérifie si au moins un groupe de plusieurs objets externes satisfont un critère de proximité et, si tel est le cas, si ce groupe interfère ou non avec autre objet.

Plus précisément, le calculateur vérifie tout d'abord si les centres des cadres « objets » de plusieurs objets externes sont situés à une distance les uns des autres inférieure à un seuil prédéterminé (de l'ordre par exemple du centimètre).

Pour bien illustrer cette opération, on a représenté sur la figure 4 un cas où deux objets externes 8, 9 satisfont le critère de proximité et où ces deux objets externes 8, 9 n'interfèrent pas avec un quelconque autre objet. Ces deux objets externes 8, 9 sont alors considérés par le calculateur comme faisant partie d'un même groupe 10.

Alors, la consigne d'usinage sera élaborée de telle manière que les deux objets externes 8, 9 soient usinés par le même outil (par exemple par une fraise), au cours d'une seule et même passe de cet outil.

Comme le montre la courbe en traits interrompus sur la figure 4, la trajectoire 40 de l'enveloppe de coupe de l'outil (ici, la fraise) sera alors calculée pour passer par les contours des deux objets externes 8, 9, pour être continue et continûment dérivable. Cette trajectoire 40 sera calculée de telle manière que le point d'entrée Pe de l'outil dans la lentille (on rappelle qu'à ce stade, la lentille aura été préalablement ébauchée selon la ligne d'ébauche 27) sera confondu avec une extrémité du contour de l'un des objets 8, et que le point de sortie Ps de cet outil hors de la lentille se fera au niveau de l'extrémité opposée du contour de l'autre des objets 9.

Entre ces deux points d'entrée Pe et de sortie Ps, on comprend que l'outil entrera dans la lentille, puis en ressortira, re-rentrera dans la lentille puis en ressortira.

Dans le mode de réalisation représenté sur les figures 2 et 5, le calculateur mémorise simplement, à ce stade du procédé, une trajectoire d'outil pour l'usinage des deux encoches de fixation 24, 25 (qui peuvent être groupées), une trajectoire d'outil pour l'encoche nasale 21 et une trajectoire d'outil pour l'encoche temporale 22.

Chacune de ces trajectoires sera confondue avec le contour de l'encoche 21, 22 correspondante. Elle correspondra alors au trajet que l'enveloppe de coupe de l'outil devra emprunter pour déborder la lentille optique L1 à la forme souhaitée.

A ce stade, pour bien illustrer le cas où un groupe de plusieurs objets externes satisfait le critère de proximité mais interfère avec autre objet, on pourra considérer le cas de deux encoches qui seraient situées de part et d'autre d'un coin formé par l'enveloppe extérieure. Le risque serait alors que la trajectoire permettant d'usiner les deux encoches vienne interférer avec l'enveloppe extérieure, au risque que l'usinage des deux encoches selon cette trajectoire ne rogne le coin de la lentille. On comprend alors qu'il conviendra d'éviter une telle situation, en ne groupant pas l'usinage des deux encoches.

Au cours de cette troisième opération S3, le calculateur élabore une trajectoire d'outil particulière pour usiner l'objet extérieur 6 non débouchant.

Cette trajectoire est ici tridimensionnelle, puisqu'elle est calculée en fonction de l'épaisseur de matière à enlever par rapport à la face avant ou par rapport à la face arrière de la lentille.

Cette trajectoire pourra comporter deux composantes (x, y) dans le plan général moyen de la lentille (élaborées de telle sorte qu'elle suive la ligne de démarcation 28), et une autre composante (z) correspondant à l'épaisseur de matière à enlever.

On notera à ce sujet qu'il sera ici important de tenir compte de la nécessité d'usiner la lentille plutôt par sa face arrière (cas général) ou plutôt par sa face avant (cas particulier où la base b1 de la lentille de présentation est très différente de celle de la lentille optique L1 à usiner).

Ici encore, la trajectoire de l'outil sera définie entre un point d'entrée de l'outil dans la lentille et un point de sortie de l'outil hors de la lentille.

La quatrième opération S4 consiste à prolonger les trajectoires des outils avant le point d'entrée Pe et au-delà du point de sortie Ps (pour les objets externes).

Pour bien comprendre cette opération, on pourra se référer à la figure 4, sur laquelle la trajectoire de l'outil (représentée en traits interrompus) a été prolongée (en traits mixtes).

Cette opération consiste, pour le calculateur, à prolonger les trajectoires calculées au point d'entrée Pe (et au point de sortie Ps) dans l'axe de la tangente à la trajectoire calculée au niveau du point d'entrée Pe (ou du point de sortie Ps). Elle sera prolongée sur une distance telle que lorsque l'outil se trouve à une extrémité de sa trajectoire, il soit situé à une distance du centre du cadre « boxing » qui est supérieure ou égale à la distance maximum entre le centre de ce cadre « boxing » et le contour externe 20.

De cette manière, il sera possible de faire pivoter la lentille optique L1 sans qu'elle ne vienne percuter l'outil.

Il pourrait également être possible de prolonger ces trajectoires dans des directions différentes, afin notamment d'assurer qu'aucun point acéré ne se crée au cours de l'usinage.

Enfin, au cours de la cinquième opération C5, le calculateur détermine l'ordre selon lequel les objets interne 3 et externes 1, 2, 4, 5, 6 devront être usinés pour réduire *a priori* au maximum la durée d'usinage de la lentille.

Le premier objet usiné sera toujours l'enveloppe extérieure 7, de manière que la forme initiale (généralement circulaire) de la lentille optique soit ramenée à la forme de la ligne d'ébauche 27 (dont on rappelle qu'elle est convexe), au moyen de l'outil de grand diamètre.

On pourra ensuite prévoir d'usiner d'abord les objets internes 3, ou d'abord les objets externes 1, 2, 4, 5, 6.

Dans le présent exposé, les objets externes 1, 2, 4, 5, 6 seront usinés avant les objets internes 3.

Les objets externes 1, 2, 4, 5, 6 sont prévus pour être usinés seuls ou par groupes.

L'ordre d'usinage des objets externes 1, 2, 4, 5, 6 est déterminé en fonction du rayon de courbure minimal RCmin de chacun desdits objets 1, 2, 4, 5, 6, de celui présentant le plus grand rayon de courbure minimum à celui présentant le plus petit rayon de courbure minimum.

Cet ordre d'usinage est également déterminé en fonction du caractère débouchant ou non des objets. Les objets non débouchant seront ici usinés ensemble, après les objets débouchant.

De cette manière, si un changement d'outil est nécessaire pour usiner ces objets externes 1, 2, 4, 5, 6, du fait notamment de leur rayon de courbure minimum ou de leur caractère non débouchant, ce changement ne sera effectué qu'une seule fois. On rappelle à ce sujet qu'on privilégie toujours l'utilisation d'un outil de grand diamètre pour usiner un objet, puisque le coût de revient de l'usinage s'en trouve alors réduit. C'est la raison pour laquelle on peut commencer par utiliser pour les objets présentant de grands rayons de courbure minimum des outils de gros diamètres, puis pour les autres objets des outils de diamètres moindres.

Comme le montre le tableau de la figure 3, l'objet externe usiné en premier sera donc ici l'encoche nasale 1, suivie de l'encoche temporale 2.

Les rayons de courbure minimaux des contours des deux encoches de fixation 24, 25 étant identiques, l'encoche usinée la première sera celle la plus proche de l'encoche temporale 2.

L'objet externe 6, non débouchant, sera ensuite usiné à son tour.

Enfin, les objets internes seront prévus pour être usinés par groupes ou seuls. On pourra prévoir d'usiner ces objets internes en fonction de leur répartition autour du centre du cadre « boxing », par exemple dans le sens des aiguilles d'une montre.

On notera ici que le caractère débouchant ou non d'un objet interne ne sera pas considéré pour déterminer l'ordre d'usinage de ces objets internes. En variante, il pourrait en être autrement.

L'ultime étape d) consiste à générer la consigne d'usinage.

Comme le montre la figure 1, cette étape d) est réalisée en deux opérations S6, S7 successives.

La première opération S6 consiste à calculer un indicateur de contraintes de fabrication, relatif à la complexité d'usinage de la lentille optique L1.

Cet indicateur de contraintes est prévu pour permettre de déterminer facilement dans quelle mesure une machine d'usinage sera apte, ou non, à usiner la lentille optique L1.

En pratique, cet indicateur de contraintes pourra être formé d'une note sur 10, ou d'un ensemble de données, permettant facilement de déterminer si, compte tenu des outils qu'elle embarque, une machine d'usinage sera ou non apte à usiner la lentille optique L1.

Cet indicateur de contraintes est ici déterminé en fonction de l'un au moins des paramètres suivants :
- le rayon de courbure minimum de chaque objet 1, 2, 4, 5, 6 appartenant à la catégorie d'objets extérieurs,
- l'épaisseur de la lentille au niveau de chaque objet 3 appartenant à la catégorie d'objets intérieurs,
- la profondeur de chaque objet 6 non débouchant,
- la face de la lentille optique L1 en creux de laquelle s'étend chaque objet 6 non débouchant.

La seconde opération S7 consiste à générer la consigne d'usinage en fonction dudit ordre d'usinage, des trajectoires calculées, et de cet indicateur de contraintes.

Cette consigne d'usinage sera élaborée sous la forme d'un fichier exploitable par des machines d'usinages différentes.

## Revendications

1. Procédé d'élaboration d'une consigne d'usinage d'une lentille optique (L1), comportant des étapes consistant à :
a) acquérir un fichier caractérisant la forme (F1) selon laquelle la lentille optique (L1) doit être usinée pour permettre son montage sur une monture de lunettes (M1), ladite forme (F1) étant **caractérisée** au moins par un contour final (20),
b) décomposer ladite forme (F1) en plusieurs objets (1, 2, 3, 4, 5, 6, 7) distincts, dont une enveloppe extérieure (7) à l'intérieur de laquelle sont situés tous les autres objets (1, 2, 3, 4, 5, 6), laquelle enveloppe extérieure (7) est définie par une ligne d'ébauche (27) qui est confondue avec la plus grande partie possible du contour final (20), qui présente en tout point une forme convexe, et qui illustre la forme du contour selon lequel la lentille optique (L1) sera détourée au moyen d'un outil de plus grand diamètre, ledit outil de plus grand diamètre présentant le plus grand diamètre parmi les outils utilisés pour usiner lesdits objets (1, 2, 3, 4, 5, 6, 7), chacun desdits autres objets (1, 2, 3, 4, 5, 6) étant affecté soit à une catégorie d'objets externes si cet objet présente un contour ouvert dont les extrémités rejoignent l'enveloppe extérieure (7), soit à une catégorie d'objets internes si cet objet présente un contour fermé
c) déterminer un ordre d'usinage desdits autres objets (1, 2, 3, 4, 5, 6, 7) en fonction de la catégorie à laquelle appartient chacun desdits autres objets (1, 2, 3, 4, 5, 6), et
d) générer la consigne d'usinage en fonction dudit ordre d'usinage.

2. Procédé d'élaboration selon la revendication 1, dans lequel :
- à l'étape b), on vérifie si au moins un groupe de plusieurs objets (3) de la catégorie d'objets internes satisfont un critère de proximité, et, si tel est le cas,
- à l'étape d), on génère la consigne d'usinage de telle sorte que les objets (3) de chaque groupe soient usinés selon une même direction de référence.

3. Procédé d'élaboration selon la revendication précédente, dans lequel, à l'étape d), on génère la consigne d'usinage de telle sorte que les objets (3) de chaque groupe soient percés au moyen d'un même foret de perçage, suivant des axes de perçage parallèles.

4. Procédé d'élaboration selon l'une de revendications précédentes, dans lequel :
- à l'étape b), on vérifie si au moins un groupe (10) de plusieurs objets (8, 9) de la catégorie d'objets externes satisfont un critère de proximité, et on vérifie que ledit groupe (10) n'interfère pas avec un autre objet, puis, en l'absence d'interférence,
- à l'étape d), on génère la consigne d'usinage de telle sorte que les objets (8, 9) dudit groupe (10) soient usinés au moyen d'un même outil, selon une trajectoire continue.

5. Procédé d'élaboration selon l'une de revendications précédentes, dans lequel, à l'étape c), l'ordre d'usinage est déterminé de telle sorte que l'enveloppe extérieure (7) soit usinée avant les objets appartenant à la catégorie d'objets externes.

6. Procédé d'élaboration selon l'une de revendications précédentes, dans lequel, à l'étape c), l'ordre d'usinage des objets (1, 2, 4, 5) appartenant à la catégorie d'objets externes est déterminé en fonction du rayon de courbure minimal de chacun de ces objets (1, 2, 4, 5).

7. Procédé d'élaboration selon l'une de revendications précédentes, dans lequel il est prévu une étape de calcul d'un indicateur de contraintes de fabrication, relatif à la complexité d'usinage de la lentille optique (L1), en fonction de l'un au moins des paramètres suivants :
- le rayon de courbure minimum de chaque objet (1, 2, 4, 5) appartenant à la catégorie d'objets extérieurs,
- la profondeur de chaque objet (3) appartenant à la catégorie d'objets intérieurs,
- la profondeur de chaque objet (6) s'étendant sur une partie seulement de l'épaisseur de la lentille optique (L1),
- la face de la lentille optique (L1) en creux de laquelle s'étend chaque objet (6) s'étendant sur une partie seulement de l'épaisseur de la lentille optique (L1).

8. Procédé d'élaboration selon l'une de revendications précédentes, dans lequel, à l'étape a), ledit fichier est déterminé en fonction d'une ou de plusieurs images (Img1) d'une lentille de présentation montée dans ladite monture de lunettes (M1) et/ou d'une ou de plusieurs images (Img2) de la monture de lunettes (M1) et/ou d'une ou de plusieurs images de la lentille de présentation nue.

9. Procédé d'élaboration selon l'une de revendications précédentes, dans lequel, à l'étape d), la consigne d'usinage est générée indépendamment des caractéristiques d'une quelconque machine d'usinage susceptible d'être utilisée pour usiner la lentille optique (L1).

## Patentansprüche

1. Verfahren zur Erzeugung von Einstellungen zum Bearbeiten einer optischen Linse (L1), das Schritte umfasst, die aus Folgendem bestehen:
a) Erstellen einer Datei, die die Form (F1) beschreibt, gemäß der die optische Linse (L1) bearbeitet werden muss, um ihre Montage in eine Brillenfassung (M1) zu gestatten, wobei die Form (F1) mindestens durch eine Endkontur (20) beschrieben wird,
b) Zerlegen der Form (F1) in mehrere unterschiedliche Objekte (1, 2, 3, 4, 5, 6, 7), darunter eine äußere Umhüllende (7), in deren Innerem sich alle anderen Objekte (1, 2, 3, 4, 5, 6) befinden, wobei die äußere Umhüllende (7) durch eine Entwurfslinie (27) definiert ist, welche mit dem größtmöglichen Teil der Endkontur (20) zusammenfällt, welche an jedem Punkt eine konvexe Form aufweist und welche die Form der Kontur, gemäß der die optische Linie (L1) mit Hilfe eines Werkzeugs mit größerem Durchmesser beschnitten wird, illustriert, wobei das Werkzeug mit größerem Durchmesser den größten Durchmesser aller für die Bearbeitung der Objekte (1, 2, 3, 4, 5, 6, 7) verwendeten Werkzeuge aufweist, wobei jedes der anderen Objekte (1, 2, 3, 4, 5, 6) entweder einer Kategorie außenliegender Objekte, wenn dieses Objekt eine offene Kontur, deren Enden mit der äußeren Umhüllenden (7) verbunden sind, aufweist, oder einer Kategorie innenliegender Objekte, wenn dieses Objekt eine geschlossene Kontur aufweist, zugeordnet wird,
c) Bestimmen einer Bearbeitungsreihenfolge der anderen Objekte (1, 2, 3, 4, 5, 6, 7) in Abhängigkeit von der Kategorie, zu der jedes der anderen Objekte (1, 2, 3, 4, 5, 6) gehört, und
d) Generieren der Bearbeitungseinstellungen in Abhängigkeit von der Bearbeitungsreihenfolge.

2. Erzeugungsverfahren nach Anspruch 1, wobei:
- in Schritt b) überprüft wird, ob mindestens eine Gruppe mehrerer Objekte (3) der Kategorie innenliegender Objekte ein Kriterium räumlicher Nähe erfüllt, und, wenn dies der Fall ist,
- in Schritt d) die Bearbeitungseinstellungen so generiert werden, dass die Objekte (3) jeder Gruppe gemäß einer gleichen Bezugsrichtung bearbeitet werden.

3. Erzeugungsverfahren nach dem vorhergehenden Anspruch, wobei in Schritt d) die Bearbeitungseinstellungen so generiert werden, dass die Objekte (3) jeder Gruppe mit Hilfe eines gleichen Bohrers gemäß parallelen Bohrachsen gebohrt werden.

4. Erzeugungsverfahren nach einem der vorhergehenden Ansprüche, wobei:
- in Schritt b) überprüft wird, ob mindestens eine Gruppe (10) mehrerer Objekte (8, 9) der Kategorie außenliegender Objekte ein Kriterium räumlicher Nähe erfüllt, und überprüft wird, ob die Gruppe (10) sich mit keinem anderen Objekt überschneidet, und dann, wenn es keine Überschneidungen gibt,
- in Schritt d) die Bearbeitungseinstellungen so generiert werden, dass die Objekte (8, 9) der Gruppe (10) mit Hilfe eines gleichen Werkzeugs gemäß einer kontinuierlichen Bahn bearbeitet werden.

5. Erzeugungsverfahren nach einem der vorhergehenden Ansprüche, wobei in Schritt c) die Bearbeitungsreihenfolge so bestimmt wird, dass die äußere Umhüllende (7) vor den Objekten, die zu der Kategorie außenliegender Objekte gehören, bearbeitet wird.

6. Erzeugungsverfahren nach einem der vorhergehenden Ansprüche, wobei in Schritt c) die Bearbeitungsreihenfolge der Objekte (1, 2, 4, 5), die zu der Kategorie außenliegender Objekte gehören, in Abhängigkeit von dem minimalen Biegeradius jedes dieser Objekte (1, 2, 4, 5) bestimmt wird.

7. Erzeugungsverfahren nach einem der vorhergehenden Ansprüche, wobei ein Schritt des Berechnens eines Indikators für Fertigungsbedingungen in Bezug auf die Bearbeitungskomplexität der optischen Linse (L1) in Abhängigkeit von mindestens einem der folgenden Parameter vorgesehen ist:
- dem minimalen Biegeradius jedes Objekts (1, 2, 4, 5), das zu der Kategorie außenliegender Objekte gehört,
- der Tiefe jedes Objekts (3), das zu der Kategorie innenliegender Objekte gehört,
- der Tiefe jedes Objekts (6), das sich nur über einen Teil der Dicke der optischen Linse (L1) erstreckt,
- der Seite der vertieften optischen Linse (L1), von der sich jedes Objekt (6) erstreckt, das sich nur über einen Teil der Dicke der optischen Linse (L1) erstreckt.

8. Erzeugungsverfahren nach einem der vorhergehenden Ansprüche, wobei in Schritt a) die Datei in Abhängigkeit von einem oder mehreren Bildern (Img1) einer Demonstrationslinse, die in der Brillenfassung (M1) montiert ist, und/oder von einem oder mehreren Bildern (Img2) der Brillenfassung (M1) und/oder von einem oder mehreren Bildern der reinen Demonstrationslinse bestimmt wird.

9. Erzeugungsverfahren nach einem der vorhergehenden Ansprüche, wobei in Schritt d) die Bearbeitungseinstellungen unabhängig von den Eigenschaften einer beliebigen Bearbeitungsmaschine, die für die Bearbeitung der optischen Linse (L1) verwendet werden könnte, generiert werden.

## Claims

1. Method for generating settings for machining an optical lens (L1), including steps consisting in:
a) acquiring a file characterizing the shape (F1) to which the optical lens (L1) must be machined in order to allow it to be mounted in a spectacle frame (M1), said shape (F1) being characterized at least by a final outline (20),
b) decomposing said shape (F1) into a plurality of distinct objects (1, 2, 3, 4, 5, 6, 7), including an exterior envelope (7) inside of which all the other objects (1, 2, 3, 4, 5, 6) are located, which exterior envelope (7) is defined by a roughing line (27) that is coincident with the largest possible portion of the final outline (20), has at every point a convex shape, and illustrates the shape of the outline to which the optical lens (L1) will be edged by means of a tool of larger diameter, said tool of larger diameter having the largest diameter among the tools used to machine said objects (1, 2, 3, 4, 5, 6, 7), each of said other objects (1, 2, 3, 4, 5, 6) being assigned either to a category of external objects if this object has an open outline the ends of which meet the exterior envelope (7), or to a category of internal objects if this object has a closed outline,
c) determining a machining order of said other objects (1, 2, 3, 4, 5, 6, 7) depending on the category to which each of said other objects (1, 2, 3, 4, 5, 6) belongs, and
d) generating the machining settings depending on said machining order.

2. Generating method according to Claim 1, wherein:
- in step b), it is verified whether at least one group of a plurality of objects (3) in the category of internal objects meets a proximity criterion, and, if such is the case,
- in step d), the machining settings are generated such that the objects (3) of each group are machined in the same reference direction.

3. Generating method according to the preceding claim, wherein, in step d), the machining settings are generated such that the objects (3) of each group are drilled by means of the same drill bit, along parallel drilling axes.

4. Generating method according to one of the preceding claims, wherein:
- in step b), it is verified whether at least one group (10) of a plurality of objects (8, 9) in the category of external objects meets a proximity criterion, and it is verified that said group (10) does not interfere with another object, then, in the absence of interference,
- in step d), the machining settings are generated such that the objects (8, 9) of said group (10) are machined by means of the same tool, on a continuous path.

5. Generating method according to one of the preceding claims, wherein, in step c), the machining order is determined such that the exterior envelope (7) is machined before the objects belonging to the category of external objects.

6. Generating method according to one of the preceding claims, wherein, in step c), the machining order of the objects (1, 2, 4, 5) belonging to the category of external objects is determined depending on the minimum radius of curvature of each of these objects (1, 2, 4, 5).

7. Generating method according to one of the preceding claims, wherein provision is made for a step of calculating an indicator of manufacturing constraints, this indicator relating to how complex it will be to machine the optical lens (L1) and depending on at least one of the following parameters:
- the minimum radius of curvature of each object (1, 2, 4, 5) belonging to the category of exterior objects,
- the depth of each object (3) belonging to the category of interior objects,
- the depth of each object (6) that extends over only some of the thickness of the optical lens (L1),
- the face of the optical lens (L1) into which each object (6) that extends over only some of the thickness of the optical lens (L1) is recessed.

8. Generating method according to one of the preceding claims, wherein, in step a), said file is determined depending on one or more images (Img1) of a demonstration lens mounted in said spectacle frame (M1) and/or on one or more images (Img2) of the spectacle frame (M1) and/or on one or more images of the bare demonstration lens.

9. Generating method according to one of the preceding claims, wherein, in step d), the machining settings are generated independently of the features of any machining machine liable to be used to machine the optical lens (L1) .
